Europäisches Patentamt

European Patent Office

Office européen des brevets

(19)

(11) Veröffentlichungsnummer : **0 025 844**
**B1**

(12) # EUROPÄISCHE PATENTSCHRIFT

(45) Veröffentlichungstag der Patentschrift :
26.01.83

(21) Anmeldenummer : 80104627.7

(22) Anmeldetag : 06.08.80

(51) Int. Cl.³ : **B 29 D 27/02**, G 05 D 11/13

(54) Verfahren und Einrichtung zum Herstellen eines insbesondere Schaumstoff bildenden fliessfähigen Reaktionsgemisches.

(30) Priorität : 17.08.79 DE 2933327

(43) Veröffentlichungstag der Anmeldung :
01.04.81 Patentblatt 81/13

(45) Bekanntmachung des Hinweises auf die Patenterteilung : 26.01.83 Patentblatt 83/04

(84) Benannte Vertragsstaaten :
AT BE CH DE FR GB IT LI NL

(56) Entgegenhaltungen :
DD A 135 301
DE A 2 364 591
DE A 2 724 132
DE A 2 840 860
DE B 2 543 302

(73) Patentinhaber : BAYER AG
Zentralbereich Patente, Marken und Lizenzen
D-5090 Leverkusen 1, Bayerwerk (DE)

(72) Erfinder : Ebeling, Wilfried
Vor Selkoren 29
D-5000 Köln 80 (DE)
Erfinder : Tennemann, Volkmar
Morsbroicher Strasse 67
D-5090 Leverkusen 1 (DE)

Jouve, 18, rue St-Denis, 75001 Paris, France

## Verfahren und Einrichtung zum Herstellen eines insbesondere Schaumstoff bildenden fließfähigen Reaktionsgemisches

Die Erfindung richtet sich auf ein Verfahren und eine Einrichtung zum Herstellen eines insbesondere Schaumstoff bildenden fließfähigen Reaktionsgemisches aus mindestens zwei miteinander reagierenden fließfähigen Komponenten, die kontinuierlich einer Mischzone zugeführt und miteinander vermischt werden, wobei der Volumenstrom mindestens einer Komponente gemessen und deren Dichte ermittelt wird und wobei der Massestrom der Komponente als Produkt der Dichte und des gemessenen Volumenstromes ermittelt wird und durch Vergleich mit einem vorgegeben Sollwert der Massestrom geregelt wird.

Unter dem Begriff « Schaumstoff » sind hierbei auch mikrozellulare Stoffe zu verstehen, die in Fachkreisen häufig schon als « Massivstoffe » bezeichnet werden.

Aus DE-B-25 43 302 ist es bekannt, die Gasbeladung der Komponenten reproduzierbar und meßbar zu gestalten und darüber hinaus die Gasbeladung automatisch zu regeln. Dazu mißt man das zeitlich geförderte Mengenvolumen der mit Gas beladenen Reaktionskomponente unter einem ersten, gegenüber einem nachgeschalteten zweiten Druckniveau höher oder niedriger gehaltenen Druckniveau, bringt daran anschließend die Reaktionskomponente auf ein zweites, gegenüber dem ersten Druckniveau niedriger oder höher gehaltenes Druckniveau und mißt das zeitlich geförderte Mengenvolumen erneut, ermittelt daraus den Differenzwert als Maß für die Gasbeladung und vergleicht diesen Wert mit einem vorgegebenen Sollwert und regelt die zuzugebende Gasmenge im Sinne der Einhaltung des Sollwertes manuell oder über eine automatische Regelvorrichtung. Der technische Aufwand hierbei ist erheblich, und es ist nicht berücksichtigt worden, daß ein konstanter Massestrom erforderlich ist.

Aus DE-A-27 24 132 sind ein Verfahren und eine Einrichtung bekannt, mit deren Hilfe man den Massestrom ermitteln kann, um aufgrund der Messung das stöchiometrische Dosierverhältnis bei Abweichungen dem vorgegebenen Sollwert wieder anzupassen. Dazu bedarf es eines großen apparativen Aufwandes, bei dem man einen Nebenstrom abzweigt und die während eines vorgegebenen Zeitintervalls durchgelaufene Gewichtsmenge mittels einer komplizierten Wiegeeinrichtung ermittelt und daraus die Dichte der Komponente als Quotient der Gewichtsmenge und der Volumenmenge ermittelt, wozu auch noch der Volumenstrom gemessen wird, woraus schließlich der Massestrom des Hauptstromes als Produkt der Dichte der Komponente und des Volumenstromes des Hauptstromes ermittelt wird. Bei der anschließenden Beeinflussung des Dosierverhältnisses aufgrund der Ermittlung des momentanen Massestromes bleibt aber der Gashaushalt der Komponente außer Betracht.

Im Prinzip ist es möglich, zum Erzielen eines Endproduktes gewünschter Qualität die beiden oben beschrieben Verfahren bzw. Einrichtungen zu kombinieren.

Diese Kombination wäre jedoch so aufwendig, daß sie für die Praxis indiskutabel ist.

Aufgabe der Erfindung ist es, ein Verfahren und eine Einrichtung zu schaffen, mit denen es mit vertretbaren Mitteln möglich ist, sowohl das stöchiometrische Dosierverhältnis der Komponenten als auch deren Gashaushalt zu regeln.

Verfahrenstechnisch wird dies dadurch bewirkt, daß die Dichte der Komponente aufeinanderfolgend unter Hochdruck und unter Niederdruck radiometrisch gemessen wird, aus der Messung der Dichte unter Hochdruck der Massestrom ermittelt wird und die Messung der Dichte unter Niederdruck als Maß für die Gasbeladung dient und daß durch Vergleich der Differenz der beiden gemessenen Dichtewerte die benötigte Gasmenge im Sinne der Einhaltung eines vorgegebenen Sollwertes geregelt wird.

Dadurch wird erreicht, daß aufgrund dieser Meßwerte gegenüber den vorbekannten Verfahren mit einer wesentlich geringeren Anzahl von Messungen und Ermittlungen die beiden ausschlaggebenen Faktoren gleichzeitig erfaßt und erforderlichenfalls entsprechend beeinflußt werden können.

Aus DD-A-135 301 ist es im Zusammenhang mit der Herstellung eines Kunststoffreaktionsgemisches zwar bekannt, radiometrische Meßmethoden einzusetzen, jedoch wird dadurch keine Verfahrensweise zur gleichzeitigen Regelung sowohl der Dosierung der Masseströme als auch deren Gasbeladung nahegelegt.

Werden Komponenten verarbeitet, bei denen von Natur aus der Massestrom und/oder der Gashaushalt konstant sind, so genügt es, nur die in dieser Hinsicht empfindlichere Komponente, wie oben beschrieben, zu beeinflussen. Die Regel für die Praxis wird jedoch sein, daß für jede Hauptkomponente entsprechend zu verfahren ist.

Das neue Verfahren hat den besonderen Vorteil, daß aufgrund der radiometrischen Dichtemessung sowohl die Grundlagen für die Regelung des Dosierverhältnisses über den Massestrom als auch diejenigen für den Gashaushalt gleichzeitig geschaffen werden.

Vorzugsweise unterwirft man die Komponentenströme wechselweise der radiometrischen Dichtemessung ; denn es genügt, daß die Dichtemessungen in angemessenen, vorzugsweise periodischen, Zeitabständen erfolgen. Eine gleichzeitige Dichtemessung aller Komponenten ist nicht unbedingt erforderlich.

Das Verfahren erlaubt also die gleichzeitige Beeinflussung des stöchiometrischen Dosierverhältnisses der Komponenten und des Gashaushalts der Komponenten aufgrund teilweise gleicher Ausgangsmeßwerte, wobei es dem Fachmann von Fall zu Fall überlassen bleibt, beim erforderlichen Nachregulieren der Masseströme den Massestrom einer Komponente zu erhöhen oder den der anderen zu erniedrigen. In gleicher Weise läßt sich die Gasbeladung durch Gaszufuhr oder Gasentzug je nach den Gegebenheiten regeln.

Zur Durchführung des neuen Verfahrens wird ausgegangen von einer Einrichtung, bestehend aus Vorratsbehältern für die Komponenten und aus Zuleitungen, die über mit Verstellvorrichtungen versehene Dosierpumpen von den Vorratsbehältern zu einem Mischkopf führen, wobei in mindestens einer der Zuleitungen zwischen Vorratsbehälter und Mischkopf eine Gasbeladungseinrichtung und ein Volumenstromzähler angeordnet sind.

Das Neue ist darin zu sehen, daß zwischen Dosierpumpe und Mischkopf ein radiometrisches Dichtemeßgerät angeordnet ist, durch dessen Meßstrecke die Zuleitung zum Mischkopf geführt ist, daß der Volumrenstromzähler und das Dichtemeßgerät mit einem Rechner verbunden sind und daß dem Rechner Regelvorrichtungen für die Verstellvorrichtung der Dosierpumpe oder für deren Antrieb und für eine Verstellvorrichtung der Gasbeladungseinrichtung zugeordnet sind.

Durch die Verwendung eines radiometrischen Dichtemeßgerätes wird der apparative Aufwand auf ein Minimum reduziert, so daß nur der Volumenstrom und die Dichte bei in der Zuleitung anliegendem Hochdruck und Niederdruck abzulesen sind. Nach Ermittlung des Massestromes kann dann erforderlichenfalls die Regelung des Dosierverhältnisses und des Gashaushaltes von Hand durchgeführt werden.

Durch Kopplung der Meßgeräte mit einem Rechner wird erreicht, daß aus dem Meßwert für den Volumenstrom automatisch der momentane Massestrom ermittelt werden kann und daß dieser Wert für den momentanen Massestrom ebenso wie der Meßwert für die momentane Dichte mit den zugehörigen Sollwerten vergleichbar sind. Das Bedienungspersonal kann nun anhand vorgegebener Tabellen erforderlichenfalls das Dosierverhältnis und die Gasbeladung entsprechend nachregeln.

Dem Rechner Regelvorrichtungen für eine Verstellvorrichtung der Dosierpumpe oder für deren Antrieb und für eine Verstellvorrichtung für die Gasbeladungsvorrichtung zuzuordnen, um den Hub der Dosierpumpe zu verstellen bzw. alternativ über den Antrieb der Dosierpumpe die Fördermenge zu variieren, bringt den besonderen Vorteil, daß sich die Nachregelung der Gasbeladung und des stöchiometrischen Dosierverhältnisses automatisch durchführen läßt, indem in den Rechner ein Program eingegeben ist, demgemäß bei gemessener Abweichung vom Sollwert die Verstellvorrichtungen betätigt werden.

Nach einer besonderen Ausführungsform ist jeder Zuleitung ein besonderes radiometrisches Dichtemeßgerät zugeordnet. Es versteht sich, daß als Äquivalent hierzu auch ein Dichtemeßgerät mit einer der Zahl der Zuleitungen entsprechenden Anzahl von Meßstrecken vorgesehen sein kann.

Alternativ und vorzugsweise hierzu ist ein gemeinsames Dichtemeßgerät für alle Zuleitungen vorgesehen, und die Zuleitungen werden wechselweise mit dessen Meßstrecke in Übereinstimmung gebracht. Es versteht sich, daß es sich hierbei um der Meßstrecke angepaßte Abschnitte der Zuleitungen handelt. Hierzu sind entweder die entsprechenden Abschnitte der Zuleitungen wechselweise in die Meßstrecke einführbar oder das Dichtemeßgerät ist bewegbar und seine Meßstrecke ist wechselweise in den Bereich jeweils einer Zuleitung plazierbar. Im ersten Falle sind beispielsweise die Bereiche der Zuleitungen auf einem Schieber oder einem Drehtisch angeordnet. Im zweiten Falle sind die entsprechenden Bereiche der Zuleitungen starr montiert und die Dichtemeßvorrichtung ist beispielsweise auf Schienen verschiebbar angeordnet, so daß seine Meßstrecke mit den einzelnen Bereichen der Zuleitungen wechselweise in Übereinstimmung gebracht werden kann.

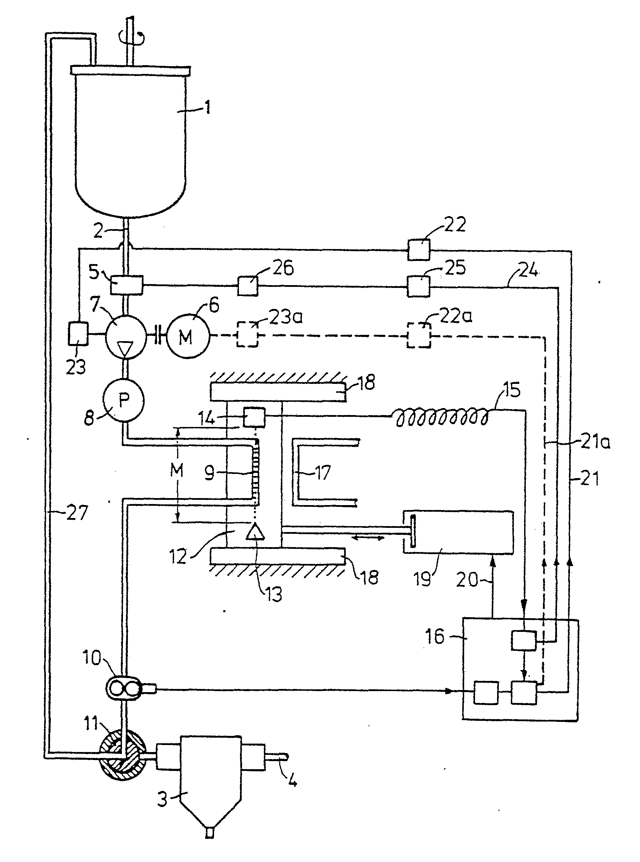

Das gemeinsame Dichtemeßgerät hat den Vorteil eines geringeren Aufwandes und auch einer geringeren Strahlenbelastung. Geeignete Dichtemeßgeräte sind z.B. aus der Schrift 81-1-1077 der Fa. berthold, Laboratorium Prof. Dr. Bertjold, D-7547 Wildbad 1, über « Radiometrische Dichtemeßanlage LB 370 », beispielsweise Abbildung 4, ersichtlich.

Die neue Einrichtung ist in der Zeichnung in einem Ausführungsbeispiel rein schematisch dargestellt und nachstehend erläutert ; und zwar am Beispiel einer Einrichtung zum Herstellen eines schäumfähigen Polyurethanreaktionsgemisches, wobei lediglich der Aufbau der Einrichtung für die Polyolkomponente ausführlich dargestellt ist, während die Zuleitung für die Isocyanatkomponente nur angedeutet ist.

Von einem Vorratsbehälter 1 gelangt die Polyolkomponente über eine Zuleitung 2 zu einem Mischkopf 3, in dem sie mit der über die Zuleitung 4 zugeführten Isocyanatkomponente vermischt wird. In der Zuleitung 2 sind nacheinander eine Gasbeladungsvorrichtung 5, eine mit einem Antrieb 6 versehene Dosierpumpe 7, ein Manometer 8, ein Meßbereichsabschnitt 9, ein Volumenstromzähler 10 sowie ein Umschaltventil 11 angeordnet.

Der Meßbereichsachnitt 9 liegt in der Meßstrecke M eines radiometrischen Dichtemeßgerätes 12, das im wesentlichen aus dem Sender 13 und dem Empfänger 14 besteht. Die aufgenommenen Meßimpulse werden über die Leitung 15 einem Rechner 16 zugeführt und angezeigt. Spiegelbildlich zum Meßbereichsabschnitt 9 ist der Meßbereichsabschnitt 17 der Zuleitung 4 angeordnet. Das Dichtemeßgerät 12 ist in Schienen 18 mittels eines pneumatischen Antriebs 19 querverschiebbar, so daß die Meßstrecke M auch mit dem Meßbereichsabschnitt 17 zur Deckung gebracht werden kann, um die Dichte der Isocyantkomponente zu messen. Der Antrieb 19 ist vom Rechner 16 aus periodisch in vorgegebenen Zeitintervallen auf einen der Meßbereichsabschnitte 9, 17 umschalt-

bar, was durch die Impulsleitung 20 versinnbildlicht ist.

Der vom Volumenstromzähler 10 ermittelte Meßwert wird vom Rechner 16 angezeigt und mit dem gemessenen Dichtewert im Rechner 16 multipliziert. Der so erhaltene Wert stellt den momentanen Massestrom dar und wird im Rechner 16 mit dem gespeicherten Sollwert verglichen. Ist eine Abweichung vorhanden, gibt der Rechner 16 über eine Leitung 21 einen Befehl an eine Regelvorrichtung 22, die einen entsprechenden Impuls an eine Verstellvorrichtung 23 zum Verstellen des Hubes der Dosierpumpe 7 gibt. Alternativ hierzu kann entsprechend der gestrichelten Darstellung der Befehl über die Leitung 21a an die Regelvorrichtung 22a gegeben werden, die einen Impuls an die Verstellvorrichtung 23a zum Verstellen der Motordrehzahl des Antriebs 6 gibt, wodurch das gleiche Resultat, nämlich die Änderung der Dosiermenge, erzielt wird.

Des weiteren wird die Differenz der unter Hochdruck und unter Niederdruck gemessenen Dichtewerte im Rechner 16 mit einem vorgegebenen Sollwert verglichen und erforderlichenfalls über eine Leitung 24 einer Regelvorrichtung 25 ein Befehl erteilt, die einen entsprechenden Impuls an eine Verstellvorrichtung 26 der Gasladungsvorrichtung 5 weitergibt, wodurch die Gasbeladung entsprechend nachgeregelt wird.

Das Umschaltventil 11 ist in der Zeichnung auf Rücklauf geschaltet, so daß die Messung im Augenblick unter Niederdruck stattfindet und die Komponente über die Leitung 27 im Kreislauf in den Vorratsbehälter 1 zurückgeführt wird.

Der Aufbau der Einrichtung für die Isocyanatseite ist analog. Es ergibt sich dabei noch die Möglichkeit, das Verhältnis der Masseströme der Komponenten zur Anzeige zu bringen.

**Ansprüche**

1. Verfahren zum Herstellen eines insbesondere Schaumstoff bildenden fließfähigen Reaktionsgemisches aus mindestens zwei miteinander reagierenden fließfähigen Komponenten, die kontinuierlich einer Mischzone zugeführt und miteinander vermischt werden, wobei der Volumenstrom mindestens einer Komponente gemessen und deren Dichte ermittelt wird und wobei der Massestrom der Komponente als Produkt der Dichte und des gemessenen Volumenstromes ermittelt wird und durch Vergleich mit einem vorgegebenen Sollwert der Massestrom geregelt wird, dadurch gekennzeichnet, daß die Dichte der Komponente aufeinanderfolgend unter Hochdruck und unter Niederdruck radiometrisch gemessen wird, aus der Messung der Dichte unter Hochdruck der Massestrom ermittelt wird und die Messung der Dichte unter Niederdruck als Maß für die Gasbeladung dient und daß durch Vergleich der Differenz der beiden gemessenen Dichtewerte die benötigte Gasmenge im Sinne der Einhaltung eines vorgegebenen Sollwertes geregelt wird.

2. Verfahren nach Anspruch 1, dadurch gekennzeichnet, daß man die Komponentenströme wechselweise der radiometrischen Dichtemessung unterwirft.

3. Einrichtung zur Durchführung des Verfahrens nach Anspruch 1 oder 2, bestehend aus Vorratsbehältern (1) für die Komponenten und aus Zuleitungen (2, 9 ; 4, 17), die über mit Verstelleinrichtungen (23) versehene Dosierpumpen (7) von den Vorratsbehältern (1) zu einem Mischkopf (3) führen, wobei in mindestens einer der Zuleitungen (2, 9 ; 4, 17) zwischen Vorratsbehälter (1) und Mischkopf (3) eine Gasbeladungseinrichtung (5) und ein Volumenstromzähler (10) angeordnet sind, dadurch gekennzeichnet, daß zwischen Dosierpumpe (7) und Mischkopf (3) ein radiometrisches Dichtemeßgerät (12) angeordnet ist, durch dessen Meßstrecke (M) die Zuleitung (2, 9 ; 4, 17) zum Mischkopf (3) geführt ist, daß der Volumenstromzähler (10) und das Dichtemeßgerät (12) mit einem Rechner (16) verbunden sind und daß dem Rechner (16) Regelvorrichtungen (22, 22a, 25) für die Verstellvorrichtung (23) der Dosierpumpe (7) oder für deren Antrieb (6) und für eine Verstellvorrichtung (26) der Gasbeladungsvorrichtung (5) zugeordnet sind.

4. Einrichtung nach Anspruch 3, dadurch gekennzeichnet, daß jeder Zuleitung (2, 9 ; 4, 17) ein besonderes radiometrisches Dichtemeßgerät (12) zugeordnet ist.

5. Einrichtung nach Anspruch 3, dadurch gekennzeichnet, daß ein gemeinsames Dichtemeßgerät (12) für alle Zuleitungen (2, 9 ; 4, 17) vorgesehen ist und die Zuleitungen (2, 9 ; 4, 17) wechselweise in dessen Meßstrecke (M) einführbar sind.

6. Einrichtung nach Anspruch 3, dadurch gekennzeichnet, daß das Dichtemeßgerät (12) bewegbar ist und seine Meßstrecke (M) wechselweise in den Bereich einer Zuleitung (9, 17) plazierbar ist.

**Claims**

1. A method for the production of a flowable reaction mixture, in particular foam-forming, from at least two flowable components reacting with each other which are fed continuously to a mixing zone and mixed together, wherein the volumetric rate of flow of at least one component is measured and its density determined, and wherein the quantitative rate of flow of the component is determined as a product of the density and of the measured volumetric rate of flow, and the quantitative rate of flow is controlled by comparison with a predetermined set value, characterised in that the density of the component is measured by radiometry under high pressure and under low pressure in succession, the quantitative rate of flow is determined from the measurement of the density under high pressure and the measurement of the density under low pressure serves as a gauge for the gas charge and in that the quantity of gas necessary is controlled so as to maintain a predetermined set value by comparison of the difference between the two measured density values.

2. A method according to claim 1, characterised in that the component streams are subjected alternately to radiometric density measurement.

3. A device for carrying out the method according to claim 1 or 2, consisting of storage containers (1) for the components and of feed pipes (2, 9 ; 4, 17) which lead via metering pumps (7) provided with regulators (23) from the storage containers (1) to a mixer head (3), wherein a gas charging device (5) and a volumetric flow counter (10) are arranged in at least one of the feed pipes (2, 9 ; 4, 17) between storage container (1) and mixer head (3), characterised in that a radiometric density measuring instrument (12) is arranged between metering pump (7) and mixer head (3), through whose measuring length (M) the feed pipe (2, 9 ; 4, 17) passes to the mixer head (3), in that the volumetric flow counter (10) and the density measuring instrument (12) are connected to a computer (16) and in that control devices (22, 22a, 25) for the regulator (23) of the metering pump (7) or for the drive (6) thereof and for a regulator (26) of the gas charging device (5) are connected to the computer (16).

4. A device according to claim 3, characterised in that each feed pipe (2, 9 ; 4, 17) is provided with a specific radiometric density instrument (12).

5. A device according to claim 3, characterised in that a common density measuring instrument (12) is provided for all feed pipes (2, 9 ; 4, 17) and the feed pipes (2, 9 ; 4, 17) can be introduced alternately in the measuring length (M) thereof.

6. A device according to claim 3, characterised in that the density measuring instrument (12) is movable and its measuring length (M) can be placed alternately into the region of a feed pipe (9, 17).

**Revendications**

1. Procédé de fabrication d'un mélange de réaction fluide en particulier formateur de matière cellulaire à partir d'au moins deux composants fluides réagissant entre eux qui sont continuellement envoyés à une zone de mélange et sont mélangés ensemble, le courant volumique d'au moins un composant et sa densité étant mesurés et le courant massique du composant étant déterminé sous la forme du produit de la densité et du courant volumique mesuré et étant réglé par comparaison avec une valeur prescrite d'avance pour le courant massique, caractérisé en ce que la densité du composant est mesurée radiométriquement successivement sous haute pression et sous basse pression, en ce qu'à partir de la mesure de la densité sous haute pression le courant massique est déterminé et la mesure de la densité sous basse pression sert de mesure pour le chargement de gaz, et en ce que par comparaison de la différence des deux valeurs de densité mesurées, la quantité de gaz nécessaire est réglée dans le sens du maintien d'une valeur prescrite imposée d'avance.

2. Procédé selon la revendication 1, caractérisé en ce qu'on soumet les courants de composant alternativement à la mesure radiométrique de la densité.

3. Appareillage pour la mise en œuvre du procédé selon la revendication 1 ou 2, se composant de récipients d'approvisionnement (1) pour les composants et de conduites (2, 9 ; 4, 17) qui conduisent en passant par des pompes (7) munies de dispositifs d'ajustage (23) à partir des récipients d'approvisionnement (1) à une tête mélangeuse (3), dans au moins une des conduites (2, 9 ; 4, 17) entre récipient d'approvisionnement (1) et tête mélangeuse (3) étant installés un appareillage de chargement de gaz (5) et un compteur de courant volumique (10), caractérisé en ce qu'entre une pompe doseuse (7) et la tête mélangeuse (3) est monté un instrument radiométrique de mesure de la densité (12) à travers le champ de mesure (M) duquel passe la conduite d'amenée (2, 9 ; 4, 17) vers la tête mélangeuse (3), en ce que le compteur de courant volumique (10) et l'instrument de mesure de la densité (12) sont reliés à une calculatrice (16), et en ce que sont asservis à la calculatrice (16) des appareils régulateurs (22, 22a, 25) pour l'appareil d'ajustage (23) de la pompe doseuse (7) ou pour la commande (6) de celle-ci et pour un appareil d'ajustage (26) de l'appareil de chargement de gaz (5).

4. Appareillage selon la revendication 3, caractérisé en ce qu'à chaque conduite d'amenée (2, 9 ; 4, 17) est asservi un instrument radiométrique de mesure de la densité (12) particulier.

5. Appareillage selon la revendication 3, caractérisé en ce qu'il est prévu un instrument de mesure de la densité (12) commun pour toutes les conduites d'amenée (2, 9 ; 4, 17) et en ce que les conduites d'amenée (2, 9 ; 4, 17) peuvent être alternativement introduites dans son champ de mesure (M).

6. Appareillage selon la revendication 3, caractérisé en ce que l'instrument de mesure de la densité (12) est déplaçable et en ce que son champ de mesure (M) peut être placé alternativement dans la région d'une conduite d'amenée (9, 17).